# EUROPÄISCHE PATENTSCHRIFT

(11) **EP 0 908 475 B1**
(45) Veröffentlichungstag und Bekanntmachung des Hinweises auf die Patenterteilung: **14.03.2001**
(21) Anmeldenummer: 98116714.1
(22) Anmeldetag: 03.09.1998
(51) Int. Cl.: C08F 214/22, C08F 14/22

(54) **Verfahren zur Herstellung von niedrigviskosen Fluorkautschuken**
Process for the preparation of low viscosity fluoroelastomers
Procédé pour la préparation d'élastomères fluorés à faible viscosité

(30) Priorität: 16.09.1997 DE 19740633
(43) Veröffentlichungstag der Anmeldung: 14.04.1999
(73) Patentinhaber: BAYER AG, 51368 Leverkusen (DE)
(72) Erfinder: Krüger, Ralf, Dr., 51467 Bergisch Gladbach (DE); Biener, Wilhelm-Franz, 51467 Bergisch Gladbach (DE)

(56) Entgegenhaltungen:
- WO-A-98/15583
- US-A- 5 182 342

## Beschreibung

Die vorliegende Erfindung betrifft ein neues Verfahren zur Herstellung von niedrigviskosen Fluorkautschuken.

In der Gummiindustrie besteht ein genereller Wunsch nach besserer Verarbeitbarkeit der eingesetzten Kautschuke. Insbesondere betrifft dies die Fließeigenschaften. Je niedrigviskoser der Rohkautschuk ist, desto einfacher ist die Verarbeitungstechnologie, desto größer ist die Produktivität und desto geringer ist der Abfall. Die genannten Aspekte sind insbesondere bei Fluorkautschuken von großer Relevanz, da es sich hierbei um teure Kautschuke handelt, die nicht durchgehend auf Spritzgießmaschinen der Gummiindustrie verarbeitet werden können.

Zur Herstellung niedrigviskoser Fluorkautschuke, wie sie z.B. in der DE-A 196 40 972.1 beschrieben worden sind, ist das im technischen Maßstab bislang übliche Verfahren der Emulsionspolymerisation ungeeignet, da zum einen der notwendige Einsatz ionischer anorganischer Initiatoren zu ionischen Endgruppen im Polymer führt, die die Polymerviskosität heraufsetzen, und zum anderen große Mengen Molekulargewichtsregler notwendig sind, die in der Regel wegen Nebenreaktionen mit dem Initiator in der wäßrigen Phase sowie Terminierungsreaktionen zu einer drastischen Herabsetzung der Raum-Zeit-Ausbeute führen.

Von den nichtwäßrigen Verfahren erweisen sich Polymerisationen im reinen verflüssigten Fluormonomer als ungünstig, da die entstehenden Polymere darin meist nicht löslich sind und auch nur wenig quellen. Eine reproduzierbare Polymerisationsrührung mit gutem Wärme- und Stoffübergang und damit akzeptablen Raum-Zeit-Ausbeuten ist auf diesem Wege ebensowenig möglich.

Hingegen lassen sich Fluormonomere in Gegenwart von bestimmten fluorhaltigen Lösungsmitteln gut polymerisieren, siehe z.B. US- 4 243 770, DE-A 196 40 972.1. In US - 5 182 342 wird die Verwendung von Fluorkohlenwasserstoffen als Polymerisationsmedium beschrieben, die bestimmte Kriterien in bezug auf das F/H-Verhältnis sowie die Lage der Wasserstoffe erfüllen. Bei allen Verbindungen dieser Art, die Wasserstoff und gegebenenfalls noch zusätzlich Chlor enthalten, besteht immer das Problem, daß diese Übertragungs- und/oder Abbruchreaktionen eingehen können. Für den Fall, daß definierte Endgruppen durch den Molekulargewichtsregler eingeführt werden sollen, dürfen jedoch vom Lösungsmittel unter den gewählten Reaktionsbedingungen keine zusätzlichen Übertragungsreaktionen ausgehen. Dies gilt insbesondere bei der Herstellung niedrigviskoser Kautschuke, die durch den Einsatz diiodorganischer Kettenübertragungsmittel an den endständigen Kohlenstoffatomen kovalent gebundenes Iod erhalten. In der DE-A 196 40 972.1 gelingt dies durch den Einsatz von 1,1,2-Trichlortrifluorethan als Polymerisations-medium. Verbindungen dieses Typs (Fluorchlorkohlenstoffe) besitzen jedoch ein erhebliches Ozonschädigungspotential. Ihr technischer Einsatz ist aus diesem Grund bereits in vielen Industrieländern verboten.

Aufgabe der vorliegenden Erfindung war es daher, ein praktikables Verfahren für die Herstellung von niedrigviskosen Fluorkautschuken zu finden, das ohne den Einsatz ozonschädigender Verbindungen auskommt.

Es wurde nun gefunden, daß mindestens eine Verbindung der Formel (I) oder (II)

R¹-SO₂-R² (I),

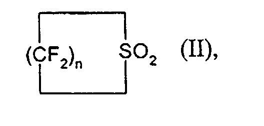

wobei R¹ ein Fluoratom oder einen Perfluoralkylrest mit 1-4 C-Atomen und R² einen Perfluoralkylrest mit 1-4 C-Atomen darstellt und n = 4 oder 5 bedeutet,
in bezug auf die oben diskutierten Kriterien geeignete Medien für die Herstellung von niedrigviskosen Fluorkautschuken darstellen.

Gegenstand der vorliegenden Erfindung ist daher ein Verfahren zur Herstellung niedrigviskoser Fluorkautschuke, wonach mindestens ein Fluormonomer in Gegenwart einer oder mehrerer Verbindungen der Formeln (I) oder (II)

R¹-SO₂-R² (I),

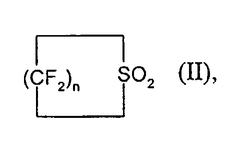

wobei R¹ ein Fluoratom oder einen Perfluoralkylrest mit 1-4 C-Atomen und R² einen Perfluoralkylrest mit 1-4 C-Atomen darstellt und n = 4 oder 5 bedeutet,
sowie gegebenenfalls eines Molekulargewichtsreglers, radikalisch polymerisiert wird.

Als Fluormonomere können im Sinne der Erfindung eingesetzt werden fluorierte, gegebenenfalls substituierte Ethylene, die neben Fluor Wasserstoff und/oder Chlor enthalten können, wie z.B. Vinylidenfluorid, Tetrafluorethylen und Chlortrifluorethylen, fluorierte 1-Alkene mit 2-8 Kohlenstoffatomen, wie z.B. Hexafluorpropen, 3,3,3-Trifluorpropen, Chlorpentafluorpropen, Hexafluorisobuten und/oder perfluorierte Vinylether der Formel CF₂=CF-O-X mit X = C₁-C₃-Perfluoralkyl oder -(CF₂-CFY-O)ₙ-R_{F}, wobei n = 1-4, Y = F oder CF₃ und R_{F} = C₁-C₃-Perfluoralkyl bedeuten.

Besonders bevorzugt ist die Kombination aus Vinylidenfluorid, Hexafluorpropen sowie gegebenenfalls Tetrafluorethylen und/oder perfluorierten Vinylethern, wie z.B. Perfluor-(methyl-vinyl-ether).

Daneben ist auch der Einsatz von copolymerisierbaren bromhaltigen Monomeren, wie z.B. Bromtrifluorethylen, 4-Brom-3,3,4,4-tetrafluorbuten-1, wie in US-A 4035565 beschrieben, oder 1-Brom-2,2-difluorethylen zur Herstellung peroxidisch vernetzbarer Fluorkautschuke möglich.

Die radikalische Polymerisation erfolgt vorzugsweise in Gegenwart mindestens eines Initiators.

Als Initiator werden vorzugsweise jeweils organische oder fluororganische Dialkylperoxide, Diacylperoxide, Dialkylperoxydicarbonate, Alkylperester und/oder Perketale eingesetzt, z.B. tert-Butylperoxipivalat, tert-Butylperoxi-2-ethyl-hexanoat, Dicyclohexylperoxidicarbonat, Bis(trifluoracetylperoxid) oder das Peroxid des Hexafluorpropenoxiddimeren {CF₃CF₂CF₂OCF(CF₃)COO}₂. Art und einzusetzende Menge hängen von der jeweiligen Reaktionstemperatur ab. Bevorzugt liegen die Halbwertszeiten des auszuwählenden Peroxids zwischen 30 und 500 min. Entsprechend werden vorzugsweise Mengen zwischen 0,05 bis 1,0 Gew.-Teile Peroxid pro 100 Gew.-Teile. umzusetzender Monomere benötigt.

Die Molekulargewichte und somit Viskositäten der Zielprodukte können über die Initiatormenge oder durch Zugabe eines oder mehrerer Molekulargewichtsreglers bestimmt werden. Als Molekulargewichtsregler werden bevorzugt Verbindungen der Formel (III)

R³BrₙIₘ (III)

mit m, n = 0 bis 2 und m + n = 1 oder 2,
wobei R³ ein aliphatischer Kohlenwasserstoff-, Fluorkohlenwasserstoff-, Fluorchlorkohlenwasserstoff- oder Fluorkohlenstoffrest mit 1-8 Kohlenstoffatomen sein kann, eingesetzt. Als Verbindung der Formel (III) sind 1,2-Dibrom-1-chlortrifluorethan und/oder 1-Brom-2-iod-tetrafluorethan bevorzugt. Bevorzugt sind diiodorganische Verbindungen, in denen die beiden Iodatome an einem oder an unterschiedlichen Kohlenstoffatomen gebunden sind. Besonders bevorzugt sind Kohlenwasserstoff- oder Fluorkohlenstoffverbindungen mit einem oder 4 Kohlenstoffatomen, wobei sich das Iod an den endständigen Kohlenstoffatomen befindet. Ganz besonders bevorzugt sind Diiodmethan und/oder 1,4-Diiod-perfluorbutan. Die Menge an diiodorganischer Verbindung beträgt vorzugsweise 0,3 bis 3,0 Gew.-Teile Iod pro 100 Gew.-Teile polymerisiertem Fluormonomer.

In dem erfindungsgemäßen Verfahren wird die radikalische Polymerisation vorzugsweise in Gegenwart von mindestens einem fluororganischen Dialkylperoxid, Diacylperoxid, Dialkylperoxydicarbonat, Alkylperester und/oder Perketal als Initiator in Kombination mit einem Molekulargewichtsregler der Formel (III) durchgeführt, in der R³ ein Kohlenwasserstoffrest mit 1-8 Kohlenstoffatomen ist.

Ebenfalls bevorzugt ist, daß als Initiator ein nichtfluorhaltiges, organisches Peroxid eingesetzt wird in Kombination mit einem Molekulargewichtsregler der Formel (III), in der R³ ein Fluorkohlenwasserstoff-, Fluorchlorkohlenwasserstoff- oder Fluorkohlenstoffrest mit 1-8 Kohlenstoffatomen ist.

Für den bevorzugten Fall der Polymerisation in Gegenwart eines diiodorganischen Molekulargewichtsreglers hat es sich als vorteilhaft erwiesen, daß entweder der Molekulargewichtsregler oder der Initiator fluoriert ist.

In einer besonders bevorzugten Ausführungsform des erfindungsgemäßen Verfahrens wird ein nichtfluorhaltiges organisches Peroxid als Initiator in Kombination mit einem Molekulargewichtsregler der Formel (III)

R³BrₙIₘ (III)

eingesetzt, in der R³ ein Kohlenwasserstoffrest mit 1-8 Kohlenstoffatomen und m, n = 0-2 und m+n = 1 oder 2 ist, wobei zu Beginn der Polymerisation maximal 10% der für den Hauptteil vorgesehenen Initiatormenge vorgelegt oder dosiert werden und die verbleibende Menge nach frühestens 1 h in einer Portion oder gestaffelt zugegeben werden.

Die Verbindungen der Formel (I) und (II) werden vorzugsweise durch Elektro- oder Direktfluorierung aus den entsprechenden nichtfluorierten Analoga hergestellt oder sind sogar kommerziell verfügbar. Beispiele für Verbindungen der Formel (I) sind C₃F₇SO₂F; C₄F₉SO₂F oder (CF₃)₂SO₂.

Die Verbindungen der Formel (I) und (II) erweisen sich als äußerst inert gegenüber Radikalen, so daß praktisch keine zusätzlichen Übertragungs- oder Terminierungsreaktionen zu beobachten sind. Ebenfalls ist die Beständigkeit der beanspruchten Verbindungen gegenüber Wasser und protischen Lösungsmitteln ausreichend groß.

Auf Grund ihrer niedrigen Siedepunkte zwischen 15 und 70°C sowie ihrer geringen Verdampfungsenthalpie können die genannten Verbindungen nach der Polymerisation einfach durch Destillation vom Kautschuk abgetrennt werden.

Ein wesentliches Kennzeichen des erfindungsgemäßen Verfahrens ist, daß sich unter Reaktionsbedingungen ein großer Teil der Monomere in den Verbindungen der Formel (I) und (II) lösen und das resultierende Kautschukpolymer eine zweite (flüssige) Phase bildet, die mit (I) und (II) sowie den Monomeren gequollen ist.

Das Verhältnis von Fluormonomer (Monomer) zu Lösungsmittel sowie der Reaktorfüllgrad wird vorzugsweise so gewählt, daß bei der Reaktionstemperatur der Anteil des Monomers in der flüssigen Phase mindestens 20 Gew.-% beträgt. Die Menge an in der Flüssigphase gelöstem Monomer kann z.B. aus der Massenbilanz anhand der Partialdrücke des in der Gasphase befindlichen Monomers bestimmt werden.

Die Reaktionstemperaturen liegen vorzugsweise zwischen 30 und 130°C. Niedrigere Temperaturen führen zu einer Verlängerung der Laufzeit und zu einem starken Viskositätsanstieg des Polymers. Mit noch höheren Temperaturen läßt sich die Raum-Zeit-Ausbeuten nicht mehr wesentlich steigern. Ein bevorzugter Temperaturbereich für die Polymerisation ist 60-120°C.

Der Druck hängt von den vorgenannten Bedingungen sowie von der Zusammensetzung des Monomergemisches ab und liegt vorzugsweise zwischen 10 und 100 bar. In dem erfingungsgemäßen Verfahren wird besonders bevorzugt bei Drücken zwischen 20 und 50 bar gearbeitet.

Die Polymerisation kann im Batch-, Konti- oder Batch/Zulauf-Verfahren in Rührkesselreaktoren durchgeführt werden, wobei das Batch/Zulaufverfahren bevorzugt wird.

Nach Beendigung der Polymerisation kann das Reaktionsgemisch leicht über einen Bodenablaß aus dem Kessel gedrückt werden, da die Polymerphase durch die starke Quellung mit (I) und/oder (II) sowie gegebenenfalls in Kombination mit erhöhter Temperatur (60-120°C) sehr niedrigviskos ist und daher selbständig herausfließen kann.

Der Begriff niedrigviskose Fluorkautschuke umfaßt hier Fluorkautschuke, die komplexe Viskositäten, gemessen mit einem Bohlin-Rheometer des Typs VOR-Melt (Kreisfrequenz ω = 6,3 s-1), < 50 kPa∗s bei 100°C, bevorzugt < 5 kPa∗s bei 100°C besitzen. Der Parameter komplexe Viskosität ist eine Quantifizierung des Gesamtwiderstandes der Probe gegen dynamische Scherung. Je geringer die komplexe Viskosität, desto niedrigviskoser die Probe. An dieser Stelle sei auf J. D. Ferry, "Visco-elastic Properties Of Polymers", 1980, John Wiley & Sons, New York verwiesen.

Die durch das erfindungsgemäße Verfahren hergestellten Fluorkautschuke lassen sich nach konventionellen Methoden compoundieren und vernetzen, vgl. Ullmann's Encyclopedia of Industrial Chemistry, 5. Auflage, 1993, Vol. A 23, Chapter 2.6, S. 265-S. 269. Auf Grund ihrer niedrigen Viskosität bietet sich zur Weiterverarbeitung zu elastischen Formkörpern die vorteilhafte Spritzgußtechnologie an.

Zur Vernetzung sind Bisnucleophile, wie Bisamine, z.B. Hexamethylendiamin, oder Bisphenole, z.B. 2,2-Bis(4-hydroxyphenyl)hexafluorpropan ("Bisphenol AF") in Kombination mit Vernetzungsbeschleunigern, wie quarternäre Phosphonium-, Ammonium- oder Sulfoniumsalze und Säureakzeptoren, wie Magnesiumoxid und Calziumhydroxid geeignet, vgl. A.L. Logothetis in Polym. Sci. 14 (1989) 251-296. Alternativ können Fluorkautschuke, die nach dem erfindungsgemäßen Verfahren hergestellt worden sind und kovalent an der Kohlenstoffhaupt- oder -seitenkette gebundenes Brom und/oder Iod enthalten, durch organische Peroxide wie 2,5-Dimethyl-2,5-bis(tertiärbutyl)-hexan in Kombination mit Covernetzern wie Triallylisocyanurat (siehe z.B. EP-A 398 241) vernetzt werden.

Die nachstehenden Beispiele dienen der Erläuterung der Erfindung.

### Beispiele:

### Beispiel 1

In einem 4,1-1-Autoklaven wurden 1,08 kg eines Gemisches aus 90 Gew.-% Perfluorbutansulfofluorid (PFBSF) und 10 Gew.-% Perfluorsulfolan (PFS) sowie 15 g Diiodperfluorbutan (DIPFB, Fluorochem Ltd)., nach vorheriger Reinigung durch Ausschütteln mit wäßriger Natriumthiosulfatlösung vorgelegt. Der geschlossene Autoklav wurde unter Kühlung zweimal jeweils evakuiert, anschließend mit 3 bar Stickstoffdruck beaufschlagt und jeweils 10 min langsam gerührt. In den evakuierten Autoklaven wurden 440 g Vinylidenfluorid (VDF) und 1027 g Hexafluorpropen (HFP) gegeben und das Reaktionsgemisch unter Rühren auf 80°C erwärmt. Nach Erreichen dieser Temperatur betrug der Autoklaveninnendruck 33 bar. Die Polymerisation wurde eingeleitet durch die Zugabe von 2,6 g tert.-Butylperoxi-2-ethyl-hexanoat (Fa. Peroxid-Chemie GmbH, Deutschland) mit einem Peroxidgehalt von 96,1%. An der beginnenden Druckabnahme erkennbar, setzte die Polymerisation nach wenigen Minuten ein. Während der Polymerisation wurde ein Monomergemisch aus 60 Gew.% Vinylidenfluorid und 40 Gew.% Hexafluorpropen so nachgedrückt, daß der Autoklaveninnendruck konstant auf 33±0,4 bar gehalten wurde. Innerhalb einer Reaktionszeit von 472 min wurden auf diese Weise insgesamt 302 g Vinylidenfluorid und 201 g Hexafluorpropen nachdosiert. Nach Beendigung der Polymerisation wurde das nicht umgesetzte Monomergemisch durch Entspannung und Evakuierung aus dem Reaktor entfernt. Der verbleibende Reaktorinhalt (Polymer + PFBSF/PFS-Gemisch) wurde 15 min nach Abstellen des Rührers über ein Bodenablaßventil vollständig in ein zweites darunterliegendes Druckgefäß abgelassen. Im Reaktor blieben keinerlei Produktreste zurück.

Nach Abtrennung des mit Lösungsmittel gequollenen Produkts (806 g) von der darüberstehenden PFBSF/PFS-Lösung, die noch 1,86 Gew.-% polymere Rückstände enthielt, wurde dieses 24 h bei 60°C in einem Vakuumtrockenschrank getrocknet, wobei das Lösungsmittel in einer Kühlfalle kondensiert wurde und 530 g eines zähflüssigen Copolymers resultierten.

Durch ¹⁹F-NMR-Analysen (Lösungsmittel: Aceton; Standard: CFCl₃) wurde folgende Copolymerzusammensetzung bestimmt: 21,5 mol.% Hexafluorpropen, 78,5 mol.% Vinylidenfluorid.

Der durch Elementaranalyse bestimmte Iodgehalt des Polymers betrug 1,35 Gew-%.

An einem Bohlin-Rheometer des Typs VOR MELT wurden bei verschiedenen Temperaturen die komplexen Viskositäten gemessen. Die Ergebnisse sind in Tabelle 1 aufgelistet.

Zur Herstellung einer vernetzungsfähigen Mischung wurden auf einem gut gekühlten Zweiwalzenmischwerk auf 100 Gew.-Teile des Fluorkautschukcopolymers 30 Teile Ruß MT N 990, 3 Teil. Calciumhydroxid, 4 Teile Perkalink 301/50 (Triallylisocyanurat, 50 %ig auf Silicagel) sowie 3 Teile Luperco 101 XL-45 (2,5-Dimethyl-2,5-bis(tertiärbutylperoxy)-hexan; 45%ig in inaktiven Füllstoffen) eingearbeitet.

Zur Bestimmung des Vernetzungsverhaltens wurden die peroxidhaltigen Mischungen in einem Monsanto-Rheometer des Typs MDR 2000 E bei 170°C untersucht (Meßzeit 30 min).

Die Mischungen wurden bei 170°C und 200bar in Formen für 1x10x10 mm Platten 15 min druckvulkanisiert und anschließend in einem Umluftofen nachvulkanisiert (1 h bei 160°C, 1 h bei 170°C, 2 h bei 180°C und 20 h bei 230 °C). An den vulkanisierten Formkörpern wurden die Zug-/Dehnungseigenschaften bestimmt. Die Ergebnisse sind in Tabelle 2 aufgelistet.

### Beispiel 2

In einem 4,1-1-Autoklaven wurden 1,01 kg eines Gemisches aus 90 Gew.-% Perfluorbutansulfofluorid (PFBSF) und 10 Gew.-% Perfluorsulfolan (PFS) sowie 9 g Diiodmethan (DIM, Fa. Merck) vorgelegt. Der geschlossene Autoklav wurde unter Kühlung zweimal jeweils evakuiert, anschließend mit 3 bar Stickstoffdruck beaufschlagt und jeweils 10 min langsam gerührt. In den evakuierten Autoklaven wurden 440 g Vinylidenfluorid (VDF) und 1028 g Hexafluorpropen (HFP) gegeben und das Reaktionsgemisch unter Rühren auf 60°C erwärmt. Nach Erreichen dieser Temperatur betrug der Autoklaveninnendruck 27 bar. Die Polymerisation wurde eingeleitet durch die Zugabe von 66 g einer 1%-igen Lösung aus Bis(trifluoracetyl)peroxid in PFBSF. An der beginnenden Druckabnahme erkennbar, setzte die Polymerisation nach wenigen Minuten ein. Während der Polymerisation wurde ein Monomergemisch aus 60 Gew.% Vinylidenfluorid und 40 Gew.% Hexafluorpropen so nachgedrückt, daß der Autoklaveninnendruck konstant auf 27±0,4 bar gehalten wurde. Nach 3 bzw. 6h wurden nochmals jeweils 33g der 1%-igen Peroxidlösung zugegeben. Innerhalb einer Reaktionszeit von 1184 min wurden insgesamt 303 g Vinylidenfluorid und 200 g Hexafluorpropen nachdosiert. Durch analoge Aufarbeitung wie im Beispiel 1 konnten 530 g eines zähflüssigen Copolymers isoliert werden.

Die Copolymerzusammensetzung betrug 21,5 mol.% Hexafluorpropen, 78,5 mol.% Vinylidenfluorid.

Der Iodgehalt des Polymers lag bei 1,4 Gew.-%.

An einem Bohlin-Rheometer des Typs VOR MELT wurden bei verschiedenen Temperaturen die komplexen Viskositäten gemessen. Die Ergebnisse sind in Tabelle 1 aufgelistet.

In analoger Weise wie im Beispiel 1 wurde eine vulkaniserfähige Mischung hergestellt. Die Ergebnisse sind in Tabelle 2 aufgeführt.

### Beispiel 3

Die Polymerisation wurde in analoger Weise wie im Beispiel 1, jedoch mit DIM als Kettenübertragungsmittel und bei 85°C / 36 bar, durchgeführt. Außerdem wurden 0,26 g Initiator vorgelegt, 1,56 g nach 1 h und 0,78 g nach weiteren 2,5 h nachdosiert. Innerhalb einer Reaktionszeit von 612 min wurden insgesamt 302 g Vinylidenfluorid und 198 g Hexafluorpropen nachdosiert. Durch analoge Aufarbeitung wie im Beispiel 1 konnten 525 g eines zähflüssigen Copolymers isoliert werden. Die Copolymerzusammensetzung betrug 78,1 mol% VDF, 21,9 mol% HFP. Der Iodgehalt lag bei 1,65 Gew.-% Iod.

In analoger Weise wie im Beispiel 1 wurde eine vulkanisierfähige Mischung hergestellt. Die Ergebnisse sind in Tabelle 2 aufgeführt.

### Beispiel 4

Die Polymerisation wurde in analoger Weise wie im Beispiel 2 bei 60°C, jedoch ohne Kettenübertragungsmittel und durch einmalige Zugabe von 3,73 g tert.-Butylperoxipivalat als TBPPI-75-AL (Lösung in Aliphaten, Peroxidgehalt von 53,6%, Fa. Peroxid-Chemie GmbH), durchgeführt. Innerhalb einer Reaktionszeit von 1249 min wurden insgesamt 298 g Vinylidenfluorid und 199 g Hexafluorpropen nachdosiert.

Durch analoge Aufarbeitung wie im Beispiel 1 konnten 465 g eines kautschukartigen Copolymers isoliert werden. Die Copolymerzusammensetzung betrug 79,2 mol% VDF, 20,8 mol% HFP.

Zur Herstellung einer vernetzungsfähigen Mischung wurden auf einem gut gekühlten Zweiwalzenmischwerk auf 100 Gew.-Teile des Fluorkautschukcopolymers 30 Teile Ruß MT N 990, 6 Teile Calciumhydroxid, 3 Teile Magnesiumoxid (Maglite D) sowie 4 Teile einer Mischung aus Bisphenol AF und Viton A (50/50 Gew.-tle.) und 2 Teile einer Mischung aus Benzyltriphenylphosphoniumchlorid mit Viton A (33/66 Gew.-tle.) eingearbeitet.

Die Ergebnisse sind in Tabelle 2 aufgeführt.

### Vergleichsbeispiel 1

### (Verwendung eines Fluorkohlenwasserstoffes als Polymerisationsmedium)

Die Polymerisation wurde in analoger Weise wie im Beispiel 1 durchgeführt, wobei anstelle der PFBSF/PFS-Mischung 829 g 1,1,1,4,4,4-Hexafluorbutan eingesetzt worden sind. Der Autoklaveninnendruck betrug 29 bar nach Monomervorlage und Erreichen der Reaktionstemperatur von 80°C.

Innerhalb einer Reaktionszeit von 1320 min wurden insgesamt 214 g Vinylidenfluorid und 147 g Hexafluorpropen nachdosiert.

Im Unterschied zum Beispiel 1 lag das Reaktionsgemisch nach Entfernen des Restmonomers als einheitliche Polymerlösung vor, aus der das Lösungsmittel abdestilliert wurde. Es resultierten 387 g eines Copolymers mit 78,1 mol% VDF und 21,9 mol% HFP sowie einem Iodgehalt von 2,2 Gew.-%.

In analoger Weise wie im Beispiel 1 wurde eine vulkaniserfähige Mischung hergestellt. Die Ergebnisse sind in Tabelle 2 aufgeführt.

Dieses Vergleichsbeispiel zeigt, daß bei Einsatz eines Fluorkohlenwasserstoffes als Polymerisationsmedium trotz der verbesserten Löslichkeit des Fluormonomers (niedrigerer Anfangsdruck) sowie des resultierenden Polymers die Raum-Zeit-Ausbeute deutlich geringer ist als bei Verwendung der erfindungsgemäßen Verbindungen.

### Vergleichsbeispiel 2

### (Substanzpolymerisation)

In einem durch mehrmaliges Evakuieren und mit Stickstoff Entspannen inertiserten 4,1-1-Autoklaven wurden 15,3 g Diiodperfluorbutan (DIPFB, Fluorochem Ltd. nach vorheriger Reinigung durch Ausschütteln mit wäßriger Natriumthiosulfatlösung), 771 g VDF und 2118 g HFP vorgelegt und unter Rühren auf 60°C erwärmt. Nach Erreichen dieser Temperatur betrug der Autoklaveninnendruck 37,7 bar. Die Polymerisation wurde eingeleitet durch die Zugabe von 4,25 g tert.-Butylperoxipivalat als TBPPI-75-AL (Lösung in Aliphaten, Peroxidgehalt von 47,1%, Fa. Peroxid-Chemie GmbH).

Innerhalb einer Reaktionszeit von 1779 min wurden insgesamt 308 g Vinylidenfluorid und 202 g Hexafluorpropen nachdosiert. Nach Beendigung der Polymerisation wurde das nicht umgesetzte Monomergemisch durch Entspannung und Evakuierung aus dem Reaktor entfernt. Das Polymer konnte nicht wie in den Beispielen 1-3 durch einfaches Ablassen aus dem Autoklaven ausgetragen werden. Das Polymer wurde mit Hilfe von 3 l Aceton herausgelöst und aus dieser Lösung mit n-Hexan gefällt. Nach Trocknung wurden 481 g eines zähflüssigen Copolymers mit einer Zusammensetzung von 76,7 mol% VDF und 23,3 mol% HFP sowie 1 Gew.-% Iod erhalten.

In analoger Weise wie im Beispiel 1 wurde eine vulkaniserfähige Mischung hergestellt. Die Ergebnisse sind in Tabelle 2 aufgeführt.

Dieses Vergleichsbeispiel zeigt, daß bei einer Polymerisation in reiner flüssiger Monomerphase trotz erheblich größerer Monomervorlage eine deutlich niedrigere Raum-Zeit-Ausbeute erzielt wird und der Produktaustrag große Probleme bereitet. Zudem wird offensichtlich die Kettenübertragung erschwert, was sich durch einen niedrigeren Iodeinbau und schlechtere Vernetzbarkeit äußert.

**Tabelle 1 :**

| Komplexe Viskositäten η* bei verschiedenen Temperaturen, gemessen mit einem Bohlin-Rheometer VOR-Melt (Kreisfrequenz ω = 6,3 s ⁻¹ ), jeweils in Pa.s | | | | | | |
|---|---|---|---|---|---|---|
| Beispiel | 1 | 2 | 3 | 4 | | |
| Vergleichsbeispiel | | | | | 1 | 2 |
| 40°C | 5650 | 5190 | 6040 | 88700 | 1430 | 20700 |
| 80°C | 271 | 242 | 266 | 42200 | 53,7 | 1800 |
| 100°C | 85,4 | 72,4 | 77 | 27900 | 15,0 | 541 |
| 140°C | 14,1 | 8,69 | 11,2 | 11100 | 2,44 | 73,9 |

**Tabelle 2:**

| Vulkanisationsergebnisse und Eigenschaften der Vulkanisate | | | | | | | |
|---|---|---|---|---|---|---|---|
| **Beispiel** | | **1** | **2** | **3** | **4** | | |
| **Vergleichsbeispiel** | | | | | | **1** | **2** |
| **MDR-Ergebnisse** | | | | | | | |
| s' min | [dNm] | 0,01 | 0,01 | 0,01 | 0,66 | 0,02 | 0,03 |
| s' max | [dNm] | 18,4 | 18,3 | 17,2 | 19,53 | 11,1 | 12,4 |
| t 90 | [min] | 8,1 | 8,8 | 9,4 | 2,1 | 9,2 | 4,6 |

| **Mechanik** | | | | | | | |
|---|---|---|---|---|---|---|---|
| Zugfestigkeit | [N/mm²] | 10 | 10 | 11 | 13 | 7,5 | 8,7 |
| Dehnung | [%] | 127 | 126 | 148 | 202 | 96 | 168 |
| S₅₀ | [N/mm²] | 3,6 | 3,5 | 3,4 | 2,7 | 3,4 | 2,4 |

## Patentansprüche

1. Verfahren zur Herstellung niedrigviskoser Fluorkautschuke wobei mindestens ein Fluormonomer sowie gegebenenfalls ein Molekulargewichtsregler radikalisch polymerisiert wird, dadurch gekennzeichnet, dass die Polymerisation in Gegenwart einer oder mehrerer der Verbindungen der Formeln (I) oder (II)
R¹-SO₂-R² (I), 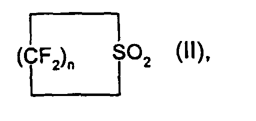
wobei R¹ ein Fluoratom oder einen Perfluoralkylrest mit 1-4 C-Atomen und R² einen Perfluoralkylrest mit 1-4 C-Atomen darstellt und n = 4 oder 5 bedeutet, stattfindet."

2. Verfahren nach Anspruch 1, dadurch gekennzeichnet, daß die radikalische Polymerisation in Gegenwart von mindestens einem organischen oder fluororganischen Dialkylperoxid, Diacylperoxid, Dialkylperoxydicarbonat, Alkylperester und/oder Perketal als Initiator durchgeführt wird.

3. Verfahren nach Anspruch 1 oder 2, dadurch gekennzeichnet, daß als Molekulargewichtsregler mindestens eine Verbindung der Formel (III)
R³BrₙIₘ (III)
mit m, n = 0 bis 2 und m + n = 1 oder 2,
wobei R³ ein aliphatischer Kohlenwasserstoff-, Fluorkohlenwasserstoff-, Fluorchlorkohlenwasserstoff- oder Fluorkohlenstoffrest mit 1-8 Kohlenstoffatomen sein kann, eingesetzt wird.

4. Verfahren nach Anspruch 2, dadurch gekennzeichnet, daß als Initiator mindestens ein fluororganisches Dialkylperoxid, Diacylperoxid, Dialkylperoxydicarbonat, Alkylperester und/oder Perketal in Kombination mit einem Molekulargewichtsregler der Formel (III) R³BrₙIₘ eingesetzt wird, in der R³ ein Kohlenwasserstoffrest mit 1-8 Kohlenstoffatomen und m, n = 0-2 und m+n = 1 oder 2 ist.

5. Verfahren nach Anspruch 2, dadurch gekennzeichnet, daß als Initiator ein nichtfluorhaltiges organisches Peroxid in Kombination mit einem Molekulargewichtsregler der Formel (III), in der R³ Fluorkohlenwasserstoff, Fluorchlorkohlenwasserstoff- oder Fluorkohlenstoffrest mit 1 bis 8 Kohlenstoffatomen ist, eingesetzt wird.

6. Verfahren nach einem oder mehreren der Ansprüche 1 bis 5, dadurch gekennzeichnet, daß ein nichtfluorhaltiges organisches Peroxid als Initiator in Kombination mit einem Molekulargewichtsregler der Formel (III)
R³BrₙIₘ (III)
mit R³ = Kohlenwasserstoffrest mit 1 bis 8 Kohlenstoffatomen und m, n = 0-2 und m+n = 1 oder 2, eingesetzt wird, wobei zu Beginn der Polymerisation maximal 10% der für den Hauptteil vorgesehenen Initiatormenge vorgelegt oder dosiert wird und die verbleibende Menge nach frühestens 1 h in einer Portion oder gestaffelt zugegeben wird.

## Claims

1. Process for the preparation of low-viscosity fluorinated rubbers, wherein at least one fluorine monomer and optionally a molecular weight regulator is polymerized by free radicals, characterized in that the polymerization takes place in the presence of one or more of the compounds of the formulae (I) or (II)
R¹-SO₂-R² (I), 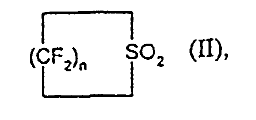
wherein R¹ represents a fluorine atom or a perfluoroalkyl radical having 1-4 C atoms and R² represents a perfluoroalkyl radical having 1-4 C atoms and n = 4 or 5.

2. Process according to claim 1, characterized in that the free-radical polymerization is carried out in the presence of at least one organic or fluoro-organic dialkyl peroxide, diacyl peroxide, dialkyl peroxydicarbonate, alkyl perester and/or perketal as an initiator.

3. Process according to claim 1 or 2, characterized in that at least one compound of the formula (III)
R³BrₙIₘ (III)
where m and n = 0 to 2 and m + n = 1 or 2,
wherein R³ can be an aliphatic hydrocarbon, fluorohydrocarbon, fluorochlorohydrocarbon or fluorocarbon radical having 1-8 carbon atoms, is employed as the molecular weight regulator.

4. Process according to claim 2, characterized in that at least one fluoro-organic dialkyl peroxide, diacyl peroxide, dialkyl peroxydicarbonate, alkyl perester and/or perketal is employed as the initiator, in combination with a molecular weight regulator of the formula (III) R³BrₙIₘ, in which R³ is a hydrocarbon radical having 1-8 carbon atoms and m and n = 0-2 and m+n = 1 or 2.

5. Process according to claim 2, characterized in that an organic peroxide which does not contain fluorine is employed as the initiator, in combination with a molecular weight regulator of the formula (III) in which R³ is a fluorohydrocarbon, fluorochlorohydrocarbon or fluorocarbon radical having 1 to 8 carbon atoms.

6. Process according to one or more of claims 1 to 5, characterized in that an organic peroxide which does not contain fluorine is employed as the initiator, in combination with a molecular weight regulator of the formula (III)
R³BrₙIₘ (III)
where R³ = a hydrocarbon radical having 1 to 8 carbon atoms and m and n = 0-2 and m+n = 1 or 2, a maximum of 10% of the amount of initiator envisaged for the main part being initially introduced or metered in at the start of the polymerization and the remaining amount being added in one portion or in stages after 1 h at the earliest.

## Revendications

1. Procédé pour la préparation d'élastomères fluorés à basse viscosité dans lequel on soumet au moins un monomère fluoré et le cas échéant un régulateur de poids moléculaire à polymérisation radicalaire, caractérisé en ce que la polymérisation est réalisée en présence d'un ou plusieurs des composés de formules (I) ou (II)
R¹-SO₂-R² (I), 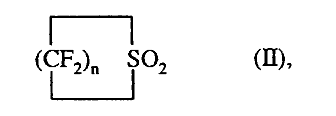
dans lesquelles R¹ représente un atome de fluor ou un radical perfluoralkyle en C₁-C₄ et R² un radical perfluoralkyle en C₁-C₄, et n = 4 ou 5.

2. Procédé selon la revendication 1, caractérisé en ce que la polymérisation radicalaire est réalisée en présence d'au moins un peroxyde de dialkyle, un peroxyde de diacyle, un peroxydicarbonate de dialkyle, un alkylperester et/ou un peracétal de nature organique ou organique fluoré, qui sert d'inducteur.

3. Procédé selon la revendication 1 ou 2, caractérisé en ce que l'on utilise en tant que régulateur de poids moléculaire au moins un composé de formule (III)
R³BrₙIₘ (III)
dans laquelle m, n = 0 à 2 et m + n = 1 ou 2,
R³ représente un radical hydrocarboné, hydrocarboné et fluoré, hydrocarboné, fluoré et chloré ou carboné fluoré aliphatique en C₁-C₈.

4. Procédé selon la revendication 2, caractérisé en ce que l'on utilise en tant qu'inducteur au moins un peroxyde de dialkyle, un peroxyde de diacyle, un peroxydicarbonate de dialkyle, un alkylperester et/ou un peracétal de nature organique fluorée en combinaison avec un régulateur de poids moléculaire de formule (III) R³BrₙIₘ dans laquelle R³ représente un radical hydrocarboné en C₁-C₈ et m, n = 0 à 2 et m + n =1 ou 2.

5. Procédé selon la revendication 2, caractérisé en ce que l'on utilise en tant qu'inducteur un peroxyde organique non fluoré en combinaison avec un régulateur de poids moléculaire de formule (III) dans laquelle R³ représente un radical hydrocarboné et fluoré, hydrocarboné, fluoré et chloré ou carboné et fluoré en C₁-C₈.

6. Procédé selon une ou plusieurs des revendications 1 à 5, caractérisé en ce que l'on utilise en tant qu'inducteur un peroxyde organique non fluoré en combinaison avec un régulateur de poids moléculaire de formule (III)
R³BrₙIₘ (III)
dans laquelle R³ = radical hydrocarboné en C₁-C₈ et m, n = 0 à 2 et m+n = 1 ou 2, en introduisant en début de polymérisation 10 % au maximum de la quantité d'inducteur prévue pour l'opération totale, et en introduisant le reste au plus tôt après 1 h, en une seule portion ou par portions.
